# EUROPEAN PATENT APPLICATION

(11) **EP 2 028 259 A1**
(43) Date of publication of application: **25.02.2009**
(21) Application number: 07447044.4
(22) Date of filing: 01.08.2007
(51) Int. Cl.: C11B 3/00, C11B 3/06, C11B 3/14, C11C 3/10, C10L 1/02

(54) **Fatty waste material purification process**

(71) Applicant: N.V. Desmet Ballestra Engineering S.A., 1935 Zaventem (BE)
(72) Inventor: Schols, Bart, 3500 Hasselt (BE); Vila Ayala, José, 9000 Gent (BE)
(74) Representative: Bird, William Edward

(57) **Abstract**

A purification process for fatty oils, particularly fatty waste material, is described to enable the oils that have been purified according to the process of the invention to be used as a biofuel and/or a raw material for biodiesel production.

A fatty waste material containing fatty acid moieties, e.g. a combination of one or more of the following components: acylglycerides, free fatty acids, soaps, phosphatides, water, and particulate impurities, polymerised and oxidised acylglycerides, and other substances like phosphorus-containing components and sulfur-containing components, is treated by a purification process comprising a vacuum stripping step followed by a treatment step with an aqueous alkali.

## Description

### FIELD OF THE INVENTION

The invention relates to a purification process for fatty oils, particularly fatty waste material, to enable the oils that have been purified according to the process of the invention to be used as a biofuel and/or a raw material for biodiesel production.

### BACKGROUND OF THE INVENTION

Biodiesel is synthesised from triglyceride oils by a process of transesterification with lower alcohols such as methanol. The esters thus formed can also be used as biofuel but the triglyceride oils themselves can also be used for the latter purpose provided their free fatty acid content is below 0.2%, since higher values would cause corrosion problems. The triglyceride oils used for this purpose can be vegetable oils, such as soya bean oil, which is the predominant source in the US, rapeseed oil in Europe or palm oil in Malaysia. Non-edible vegetable oils such as *Jatropha curcas* are also being considered as raw material for biodiesel to ease the oil demand. The triglyceride oils can also be of animal origin such as for instance beef tallow. However, these often constitute food grade material and to provide an outlet for otherwise worthless fatty oil products such as but not limited to inedible beef tallow, attempts are also being made to convert the latter products into biodiesel.

An important source of fatty waste is constituted by skimmings from interceptor basins that prevent fatty waste from entering the municipal sewer system. Such interceptor basins, or grease traps, are common in restaurants, institutional kitchens and also in several branches of the food industry such as for instance the dairy industry and the edible oil processing industry. According to U.S. Patent No. 5,225,085, typically grease trap waste is about 15% to 40% grease and about 10% to 15% solids, with the balance being water.

Restaurants and institutional kitchens also provide another stream of fatty waste: spent deep frying fat or oil, This waste material still has a high triglyceride content but its fatty acid moieties may be partially oxidised, dimerised or even polymerised. In addition, this fatty waste will often contain food residues and colouring matter. On the other hand, the phosphatide content is often quite low because the oils or fats have been refined before being used.

Such waste products can rarely be used for soap production because of their poor colour. For biodiesel production on the other hand, this colour hardly matters. However, because of their very nature, these waste products are treated without care. Consequently, they may contain other waste products. They may contain former packaging material such as scraps of polythene. They may contain particulate matter, water and all kind of substances that interfere with the biodiesel process.

Accordingly, these waste products serving as raw material for biodiesel production require extensive purification. Such a purification process is disclosed in U.S. Patent No. 5,972,057. It comprises the steps of: removing solid materials contained in a waste edible oil, heating said waste edible oil from which solid materials have been removed to a predetermined temperature, thereby removing moisture and materials of odour contained in the waste edible oil by evaporation. The oil that has thus been pre-treated is then transesterified with a lower alcohol and the reaction product is further treated according to methods that form part of the prior art.

However, waste oils may be loaded with slimy substances that are not removed by purification the process as disclosed in U.S. Patent No. 5,972,057. For these slimy substances, U.S. Patent No. 6,960,673 discloses a pre-treatment characterised in that the crude oil or fat loaded with slimy substances is treated with a mixture used at 0.1 wt.% to 5 wt.% in relation to the oil or fat and comprising an alcohol and concentrated acid, and that said slimy substances swelled and being no longer oil-soluble or fat-soluble due to the treatment are subsequently separated. Thereafter, the oil or fat thus treated is preferably washed with an alkaline glycerol phase arising from the alkaline catalysed transesterification step. This washing step may inactivate the residual acid that had been added with the alcohol, but when the waste oil or fat also contains appreciable amounts of free fatty acids, this pre-treatment does not provide an oil that can be transesterified with lower alcohols to yield biodiesel in accordance with the methods that form part of the prior art. These free fatty acids would inactivate the basic catalyst and unwieldy amounts of catalyst would be needed to ensure that some basic catalyst is left after the free fatty acids have been neutralised. Moreover, the large amounts of soaps formed by the inactivation would interfere with the transesterification process by acting as emulsifiers.

### OBJECTS OF THE INVENTION

Accordingly, it is an object of the invention to provide a good process for pre-treating waste oils.

### SUMMARY OF THE INVENTION

It has surprisingly been found that the above object can be attained when a fatty waste material containing fatty acid moieties, e.g. a combination of one or more of the following components: acylglycerides, free fatty acids, soaps, phosphatides, water, and particulate impurities, polymerised and oxidised acylglycerides, and other substances like phosphorus-containing components and sulfur-containing components, is treated by a purification process comprising a vacuum stripping step followed by a treatment step with an aqueous alkali.

Accordingly, the process according to the invention contravenes current neutralisation processes, which commence with an acid treatment to decompose non-hydratable phosphatides or with an alkali treatment to neutralise and remove free fatty acids, and only subject the oil thereafter to a vacuum stripping treatment. This latter vacuum stripping treatment can be just a deodorisation treatment to remove malodorous compounds or a physical refining treatment which also neutralises the oil by the volatilisation of free fatty acids.

The process according to one embodiment of the present invention may be preceded by a filtration or decantation process to remove particulate matter.

Similarly, in another embodiment of the present invention, it may be preceded by an acid treatment in order to acidulate any soaps that may be present in the fatty waste material and thus prevent excessive foaming during the vacuum stripping step of the process according to the invention. This acid treatment may also act as an acid degumming process and remove phosphatides if present. The step of the process of the invention that involves a treatment with alkali, can also be followed by one or more post-treatments such as but not limited to a filtration or adsorptive cleansing followed by filtration.

It is an advantage of the invention to pre-treat waste oils and fats of variable composition to such an extent that the pre-treated oils can be used as biofuel. The present invention includes production of biodiesel by transesterification utilising a fatty waste material obtained from any of the processes according to the invention as well as the biodiesel produced thereby.

It is also an advantage of the invention to pre-treat waste oils and fats of variable composition to such an extent that the pre-treated oils can be transesterified with a lower alcohol and an alkaline catalyst to yield biodiesel.

It is also an advantage of the invention to minimise the alkaline catalyst requirement during said transesterification process.

It is a further advantage of the invention to permit the biodiesel yield to be maximised.

It is also an advantage of the invention to employ a minimum of standard equipment.

These and further advantages of the invention will become apparent from the description and the examples herein after.

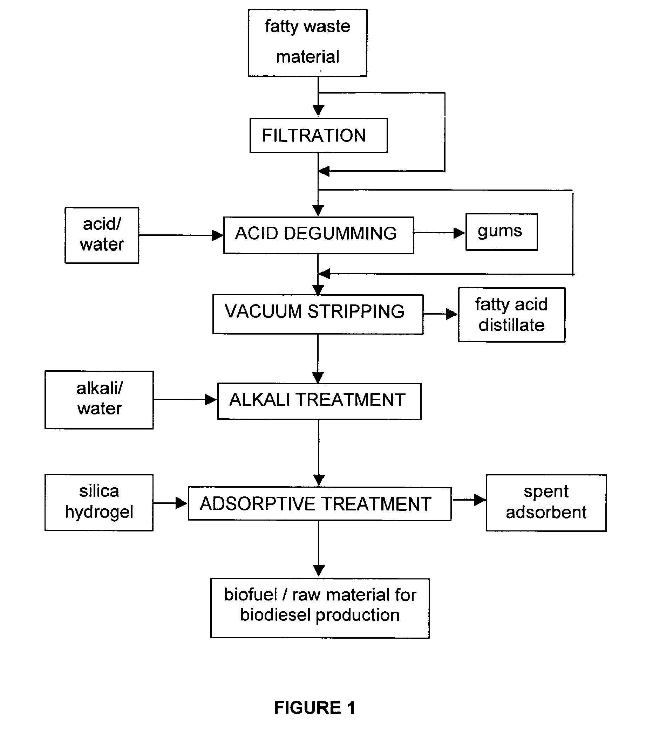

### BRIEF DESCRIPTION OF THE DRAWING

The single figure schematically shows a flow diagram of the process of the invention and it also illustrates a number of optional pre-treatments and an optional post-treatment.

### DETAILED DESCRIPTION OF THE INVENTION

The fatty waste material containing fatty acid moieties that is to be purified by the process according to the invention can be a triglyceride oil from vegetable and/or animal origin, a crude oil or fat still comprising free fatty acids and/or phosphatides, in particular it can be a used oil or fat or, in fact, any oil or fat waste product or by-product of edible oil processing. Accordingly, the fatty waste material can comprise spent deep frying oil, trap greases, acid oils as obtained by the acidulation of soapstock to name but a few of such sources.

Consequently, the fatty waste material can also comprise particulate contaminants and to protect the downstream processing equipment, it may therefore be advantageous to remove some or most of this particulate material before subjecting the fatty waste material to the purification process of the invention. The type of equipment to be used to remove this particulate matter, such as but not limited to screens, filters and decanters, depends on the type of said matter and its selection will present no difficulty to those skilled in the art. Since the separation equipment performs better when the product viscosity is low, the fatty waste material is preferably brought to a temperature in the range of 70 to 100°C. In the figure attached herewith, this ' Filtration ' treatment has been indicated as optional in that the fatty waste material can also be ' acid degummed ' and/or' vacuum stripped ' without having been filtered.

In addition to free fatty acids, the fatty waste material may also comprise soaps. Since these will cause the fatty oil to foam during the subsequent vacuum-stripping step of the process according to the invention, these soaps are preferably converted into free fatty acids by treating the fatty wastematerial with an aqueous solution of an inorganic acid such as sulphuric acid. In the figure attached herewith, this step has been denoted as ' acid degumming '. Other inorganic acids and even organic acids can also be used and thus fall within the scope of the present invention. On the other hand, if a waste aqueous acid stream happens to be available, this stream is preferably used for the acidulation of the soap present in the fatty waste material. Acid strengths in the pH range of 3 to 6 have been found to be effective.

In addition to acidulating the soap present in the fatty waste material, the acid may decompose some non-hydratable phosphatides, if present in the fatty waste material, and the water in the aqueous acid solution may cause some of these phosphatides to hydrate and move to the aqueous phase. To this end, an amount in a range of 0.05 to 1.0 % by weight of a degumming acid is finely dispersed in the fatty waste material that is held at a temperature of for instance 70 to 100°C. Other water-soluble constituents present in the fatty waste material will also move to the aqueous phase and thus be taken out of the fatty waste material. It is for this reason that the aqueous phase is preferably separated from the partially purified fatty waste material. In the figure attached herewith, the acid wash separated from the fatty waste material has been denoted as ' gums '. Another reason for the acid removal is that there should preferably be no acid present when the fatty waste material is heated to vacuum stripping temperature since the acid might catalyse unwanted side reactions. This separation will reduce the residual alkali metal content in the fatty waste material to less than 50 ppm and may also reduce the residual phosphorus content to below 100 ppm.

As a direct consequence of the aqueous acid washing step according to the present invention, the fatty waste material typically contains some residual water. According to the process of the invention, there is no specific need to remove this water by drying. According to the process of the invention, the fatty waste material is subjected to a vacuum stripping treatment and this implies that it will be degassed before being heated to a vacuum stripping temperature; the residual water even facilitates dissolved gases to be liberated.

For performing the vacuum stripping step according to the process of the invention, a simple continuous deodoriser as used for the processing of edible oil has been found to constitute an adequate equipment. It should permit the fatty waste material to be heated to a temperature of for instance 200 to 260°C. A directly fired heat exchanger, heat exchange with thermal oil or heating by high pressure steam are all fully satisfactory means to reach a temperature within the above range. The vacuum stripping unit preferably operates at a pressure of 3 to 10 hPa. The amount of stripping medium to be used in this step is preferably such as to reduce the residual free fatty acid content to below about 2 % by weight, measured as oleic acid. In principle, a vacuum steam stripping process can reduce the residual free fatty acids to much lower values such as 0.1 wt.% or even lower but this reduction to lower values requires much more stripping steam and thus reduces the capacity of the vacuum stripping unit. For the performance of the process according to the present invention, a residual free fatty acid content ranging from 1 to 2 weight% usually constitutes an optimum compromise between operating costs such as, but not limited to, steam usage in the vacuum unit connected to the vacuum stripper unit, and biodiesel yield.

The gases leaving said unit are preferably passed through a scrubber to condense the free fatty acids and other organic volatiles stripped out of the fatty waste material. This scrubber condensate has been denoted as ' fatty acid distillate ' in the figure attached herewith. The scrubber is provided with a bleed of fatty acid distillate, which distillate is a valuable starting material for biodiesel production by a process of esterification with for example methanol. Accordingly, the fatty acids stripped from the fatty waste material are not lost but instead can also be used for biodiesel production so that the process of the invention permits the biodiesel yield to be maximised.

The second step according to the process of the invention involves a treatment with alkali such as but not limited to caustic soda, that is very similar to the chemical neutralisation applied to crude or water degummed edible oils. Accordingly, the temperature of the fatty oil that has undergone a vacuum stripping treatment is controlled within a range of about 60 to 100°C and preferably 70 to 95°C. The amount of aqueous alkali to be used in the process according to the invention is preferably equal to the stoichiometric requirement with respect to the free fatty acids present plus an amount of 0.3 to 3 kg per tonne of fatty waste material, preferably from 0.8 to 1.4 kg per tonne of fatty waste material. The strength (i.e. concentration) of aqueous alkali to be used in the process according to the invention is preferably below 14 % by weight. Water washing the oil is not necessary and the alkali treated fatty oil can be used as such in a transesterification process leading to biodiesel.

If the fatty material is going to be used as biofuel, it should preferably be soap-free. This can be easily realised in one embodiment of the process according to the invention by providing an adsorptive post-treatment using silica hydrogel such as Trisyl ® (Davison Division, W.R. Grace) of Sorbsil ® (Ineos Silicas Americas). An amount within the range of about 0.2 to 1.0 % by weight of silica hydrogel with respect to the fatty material has been found to be adequate in this embodiment of the process of the invention. A preferred range is from about 0.4 to 0.6 % by weight silica hydrogel with respect to the fatty waste material. The adsorption treatment is preferably carried out within a temperature range of 40 to 70°C and more preferably in the range of 50 to 60°C. Besides the soaps, the adsorptive treatment also removes some phosphatides if present and the low temperature filtration step used to remove the spent adsorbent is also effective in removing scraps of polythene if present.

### EXAMPLE

The process according to the invention is illustrated by the treatment of a sample of low quaiity chicken fathaving a free fatty acid content of 20.2% and levels of phosphorus and earth alkali metal levels were also too high for a feedstock for biodiesel production. The sample was heated to 70°C and washed with 3% water.

Subsequently, the washed sample was introduced into a deodoriser, heated to 220°C and stripped under a vacuum of 3 hPa with 1% by weight of steam over a period of 60 minutes. After having been cooled down, the sample was neutralised. The neutralisation process comprises:
■ heating the deodorised sample to 90°C,
■ adding 0.2% (volume/weight) of a 40 weight% phosphoric acid solution,
■ dispersing this acid solution into the oil by use of a high shear mixer,
■ allowing the phosphoric acid to react for a period of 10 minutes,
■ adding caustic soda as an aqueous solution of 14 weight% in an amount that is a molar equivalent to the free fatty acid present,
■ dispersing this caustic solution into the oil with a high shear mixer,
■ adding 3 weight% of water,
■ holding the reaction mixture for a period of 10 minutes, and
■ separating the phases by centrifuge for 15 minutes at 2 000 G.

The neutralised sample was subsequently subjected to an adsorptive treatment comprising the steps of:
■ bringing the neutralised sample to a temperature of 70°C,
■ adding 0.3 weight% of a 30% (weight/weight) solution of citric acid in water,
■ dispersing this acid solution into the oil by using a high shear mixer,
■ adding 0.5 weight% of water,
■ holding the acidified oil for a period of 15 minutes at the temperature of 70°C,
■ adding 0.5 weight% of silica hydrogel (commercially available under the trade name Trysil ® 300 from Grace GmbH & Co KG, Worms, Germany),
■ agitating, thereby forming a suspension, for a period of 30 minutes to prevent the silica from settling,
■ drying the suspension by heating to 90°C and applying a vacuum of 50 hPa for a period of 30 minutes, and
■ removing the spent silica by filtration over a filter paper (Whatman no.1).

Samples were taken at certain stages of the process (as indicated in the Table below) and analysed for free fatty acids (hereinafter referred as FFA, measured as oleic acid) and for the elements phosphorous, iron, calcium and magnesium. The analytical results have been summarised in the table below:

**TABLE**

| Sample | FFA (% oleic) | P (ppm) | Fe (ppm) | Ca (ppm) | Mg (ppm) |
|---|---|---|---|---|---|
| starting material | 20.2 | 101.2 | 17.6 | 34.7 | 7.4 |
| after water washing | 20.3 | 91.4 | 16.8 | 30.1 | 5.2 |
| after deodorisation | 1.1 | 120.2 | 22.5 | 40.0 | 7.0 |
| after neutralisation | 0.17 | 47.3 | 11.1 | 22.5 | 3.4 |
| After silica treatment | ND | 39.7 | 9.8 | 18.4 | 2.8 |

The table clearly shows that washing the sample of chicken fat with water had only a marginal effect on the contents of phosphorus, iron, calcium and magnesium. Stripping the sample with steam under vacuum, drastically reduced the free fatty acid content of the sample. Since this FFA reduction decreased the weight of the sample, the contents of phosphorus, iron calcium and magnesium increased *pro rata*.

The neutralisation step of the process according to the invention not only reduced the free fatty acid level to a considerably lower level, it also removed more than 40% of the phosphorus, iron, calcium and magnesium from the deodorised sample. Accordingly, the neutralised sample constitutes a highly suitable starting material for the production of biodiesel by transesterification. The final adsorptive treatment with silica hydrogel caused a further small reduction in phosphorus, iron, calcium and magnesium contents..

## Claims

1. A process for the purification of a fatty waste material containing fatty acid moieties, wherein said process comprises a vacuum stripping step followed by an aqueous alkali treatment step.

2. A process according to claim 1, wherein said aqueous alkali treatment step is followed by an adsorptive treatment step.

3. A process according to claim 2, wherein silica hydrogel is used as the adsorbent in said adsorptive treatment step.

4. A process according to any of claims 1 to 3, wherein an acid degumming step is performed before said vacuum stripping step.

5. A process according to any of claims 1 to 4, wherein a filtration step is performed before said vacuum stripping step or acid degumming step.

6. A process according to claim 5, wherein said filtration step is realised at a temperature ranging from 70 to 100°C.

7. A process according to any of claims 1 to 6, wherein said vacuum stripping step is conducted at a temperature ranging from 200 to 260°C and under a pressure ranging from 3 to 10 hPa.

8. A process according to any of claims 1 to 7, wherein said vacuum stripping step is realised until the fatty acid content of said fatty material is less than 2 % by weight expressed as oleic acid.

9. A process according to any of claims 1 to 8, wherein said aqueous alkali step is conducted at a temperature ranging from 60 to 100°C with an amount of alkali that exceeds the molar equivalentof the free fatty acids present in the stripped fatty material by 0.3 to 3 kg per tonne of fatty waste material.

10. A process according to any of claims 1 to 9, wherein the aqueous alkali strength is below 14 % by weight.

11. A process according to any of claims 2 to 10, wherein the adsorptive treatment is conducted at a temperature ranging from 40 to 70°C with an amount of silica hydrogel ranging from 0.4 to 0.6 % by weight of said fatty waste material.

12. Production of biodiesel by transesterification utilising a fatty waste material obtained from the process according to any of the previous claims.
